(19) Europäisches Patentamt

European Patent Office

Office européen des brevets

(11) **EP 1 018 543 B1**

(12) **EUROPÄISCHE PATENTSCHRIFT**

(45) Veröffentlichungstag und Bekanntmachung des Hinweises auf die Patenterteilung:
**07.12.2005 Patentblatt 2005/49**

(51) Int Cl.⁷: **C11D 3/37**, C11D 1/66,
C08L 79/02, C08G 73/04
// (C08L79/02, 5:00)

(21) Anmeldenummer: **00100365.6**

(22) Anmeldetag: **07.01.2000**

(54) **Acylierte polymere Polyamine**

Acylated polyamines

Polyamines acylées

(84) Benannte Vertragsstaaten:
**AT BE CH CY DE DK ES FI FR GB GR IE IT LI LU MC NL PT SE**
Benannte Erstreckungsstaaten:
**RO SI**

(30) Priorität: **08.01.1999 DE 19900458**

(43) Veröffentlichungstag der Anmeldung:
**12.07.2000 Patentblatt 2000/28**

(73) Patentinhaber: **BASF Aktiengesellschaft**
**67056 Ludwigshafen (DE)**

(72) Erfinder:
• **Zirnstein, Michael**
**69198 Schriesheim (DE)**
• **Oetter, Günter**
**67227 Frankenthal (DE)**
• **Tiefensee, Kristin**
**67368 Westheim (DE)**
• **Oppenländer, Knut**
**67061 Ludwigshafen (DE)**
• **Decker, Jürgen**
**67346 Speyer (DE)**
• **Ehle, Michael**
**67071 Ludwigshafen (DE)**

(74) Vertreter: **Kinzebach, Werner et al**
**Ludwigsplatz 4**
**67059 Ludwigshafen (DE)**

(56) Entgegenhaltungen:
WO-A-90/08175          DE-A- 3 421 525
US-A- 5 786 308

• **PATENT ABSTRACTS OF JAPAN vol. 1997, no. 10, 31. Oktober 1997 (1997-10-31) & JP 09 157113 A (MIYOSHI OIL &AMP;FAT CO LTD), 17. Juni 1997 (1997-06-17)**

**Beschreibung**

Die vorliegende Erfindung betrifft acylierte polymere Polyamine, ihre Verwendung als Verdickungsmittel sowie wässrige Zusammensetzungen, welche diese Polyamine enthalten.

Verdickungsmittel werden in großem Umfang zur Erhöhung der Viskosität von wässrigen Zubereitungen eingesetzt, beispielsweise auf dem Gebiet der Pharmazie und der Kosmetik. Beispiele für häufig verwendete Verdickungsmittel sind Fettsäurepolyethylenglycolmonoester, Fettsäurepolyethylenglycoldiester, Fettsäurealkanolamide, oxethylierte Fettalkohole, ethoxylierte Glycerinfettsäureester, Celluloseether, Natriumalginat, Polyacrylsäuren sowie Neutralsalze.

Die Verwendung der bekannten Verdickungsmittel ist jedoch, je nach der zu verdickenden Zubereitung, mit Nachteilen verbunden. So kann die Verdickungswirkung und die Salzstabilität der Verdikkungsmittel nicht zufriedenstellend, ihr Einsatz unerwünscht und ihre Einarbeitung in die zu verdickende Zubereitung erschwert sein.

Die EP-A-0 336 901 beschreibt eine zweiphasige medizinische Hautpflegezusammensetzung zur Erhöhung des Feuchtigkeitsgehaltes der Haut. Diese kann als nichtionisches oberflächenaktives Mittel ein acyliertes Polyethylenimin mit $C_{12}$- bis $C_{18}$-Acylresten aufweisen.

Die FR-A-2 164 801 beschreibt ein mit Ethylformiat teilformyliertes Polyethylenimin und dessen Verwendung in kosmetischen Zusammensetzungen.

Die JP-A-09 157 113 beschreibt mit Fettsäuren acylierte Polyethylenimine und ihre Verwendung als Bakteriostatika, z. B. in kosmetischen Formulierungen.

Die WO 90/08175 offenbart Poly-N-acylakylenimine, wobei 20 bis 100 Gew.-% der Polymerbausteine den Acylrest einer einfach oder mehrfach ungesättigten aliphatischen Carbonsäure mit 16 bis 22 C-Atomen oder eine Mischung solcher Reste und 80 bis 0 Gew.-% der Polymerbausteine den Acylrest einer Carbonsäure mit 1 bis 22 C-Atomen oder eine Mischung solcher Reste aufweisen. Derartige Verbindungen finden als oxidativ härtende Bestandteile von Anstrichmitteln Verwendung.

Die DE 3 421 525 betrifft Blockcopolymere von Poly(N-formylethylenimin) oder Poly(N-acetylethylenimin) mit Poly(N-acylethylenimin) oder Poly(N-acylpropylenimin) mit einem Molekulargewicht von 500 bis 50.000, wobei die Acylgruppe einen $C_6$-$C_{18}$-Alkyl-, Aralkyl- oder Aryl-Rest aufweist. Das Verhältnis von Polymerbausteinen mit Formyl- oder Acetylgruppen zu den Polymerbausteinen mit Acylgruppen, die $C_6$-$C_{18}$-Alkyl, Aralkyl- oder Arylreste aufweisen, beträgt 0,1 bis 10. Diese Blockcopolymere weisen eine niedrige Oberflächenspannung auf und finden als oberflächenaktive Mittel Verwendung.

Der vorliegenden Erfindung liegt die Aufgabe zugrunde, ein neues Verdickungsmittel zur Verfügung zu stellen. Dieses soll sich für wässrige Formulierungen, bevorzugt für kosmetische Zusammensetzungen, eignen. Vorzugsweise soll es für tensidhaltige Zusammensetzungen, insbesondere für Zusammensetzungen, welche ein Alkyl- oder Alkenylpolyglycosid enthalten, brauchbar sein.

Überraschenderweise wurde nun gefunden, dass diese Aufgabe durch acylierte polymere Polyamine gelöst wird, bei denen ein Teil der Polyamin-Stickstoffatome wenigstens einen langkettigen $C_8$- bis $C_{28}$-Acylrest und ein weiterer Teil der Polyamin-Stickstoffatome wenigstens einen kurzkettigen $C_1$- bis $C_7$-Acylrest aufweist.

Gegenstand der vorliegenden Erfindung ist daher die Verwendung acylierter polymerer polyamine, wobei

a) ein Teil der Polyamin-Stickstoffatome Acylreste der allgemeinen Formel I

$$R^1\text{-CO-} \tag{I}$$

trägt, worin

$R^1$     ausgewählt ist unter $C_7$-$C_{27}$-Alkyl, $C_7$-$C_{27}$-Alkenyl und $C_7$-$C_{27}$-Hydroxyalkyl, und

b) ein Teil der Polyamin-Stickstoffatome Acylreste der allgemeinen Formel II

$$R^2\text{-CO-} \tag{II}$$

trägt, worin

$R^2$     ausgewählt ist unter Wasserstoff, $C_1$-$C_6$-Alkyl und $C_1$-$C_6$-Hydroxyalkyl,

als Verdickungsmittel.

Im Rahmen der vorliegenden Erfindung umfasst der Ausdruck $C_1$- bis $C_6$-Alkyl geradkettige und verzweigte Alkylgruppen. Dazu zählen insbesondere Methyl, Ethyl, n-Propyl, Isopropyl, n-Butyl, 1-Methylpropyl, 2-Methylpropyl, 1,1-Dimethylethyl, n-Pentyl, 1-Methylbutyl, 2-Methylbutyl, 3-Methylbutyl, n-Hexyl. Bevorzugt handelt es sich um geradkettige und verzweigte, $C_1$- bis $C_3$-Alkylgruppen.

$C_1$-$C_6$-Hydroxyalkyl steht für einen mit 1 oder 2 Hydroxygruppen substituierten $C_1$-$C_6$-Alkylrest, wie 1-, 2- oder 3-Hydroxypropyl, 1-, 2-, 3- oder 4-Hydroxybutyl oder 1-, 2-, 3-, 4- oder 5-Hydroxypentyl, insbesondere 3-Hydroxypropyl und 5-Hydroxypentyl.

Der Ausdruck $C_7$- bis $C_{27}$-Alkyl umfasst geradkettige und verzweigte Alkylgruppen. Vorzugsweise handelt es sich dabei um geradkettige und verzweigte $C_9$- bis $C_{25}$-Alkyl-, besonders bevorzugt um $C_{10}$- bis $C_{22}$- und speziell $C_{11}$- bis $C_{19}$-Alkylgruppen. Bevorzugt handelt es sich dabei um überwiegend lineare Alkylreste, wie sie auch in natürlichen oder synthetischen Fettsäuren und Fettalkoholen sowie Oxoalkoholen vorkommen. Dazu zählen insbesondere n-Octyl, Ethylhexyl, 1,1,3,3-Tetramethylbutyl, n-Nonyl, n-Decyl, n-Undecyl, n-Dodecyl, n-Tridecyl, Myristyl, Pentadecyl, Palmityl (=Cetyl), Heptadecyl, Octadecyl, Nonadecyl, Arachinyl, Behenyl, Lignocerenyl, Cerotinyl, Melissinyl.

$C_1$-$C_{27}$-Hydroxyalkyl steht für einen der vorgenannten $C_1$-$C_{27}$-Alkylreste, die eine, zwei, drei oder vier, vorzugsweise eine oder zwei Hydroxygruppen aufweisen, z. B. für 10-Hydroxydecyl, 11-Hydroxyheptadecyl, 8,9-Bishydroxyheptadecyl und 3-Hydroxyheptadecyl.

$C_7$- bis $C_{27}$-Alkenyl steht vorzugsweise für geradkettige und verzweigte Alkenylgruppen, die einfach, zweifach oder mehrfach ungesättigt sein können. Bevorzugt handelt es sich um $C_9$- bis $C_{25}$-, insbesondere um $C_{10}$- bis $C_{22}$- und speziell um $C_{11}$- bis $C_{19}$-Alkenylgruppen. Dazu zählen insbesondere Octenyl, Nonenyl, Decenyl, Undecenyl, Dodecenyl, Tridecenyl, Tetradecenyl, Pentadecenyl, Hexadecenyl, Heptadecenyl, Octadecenyl, Nonadecenyl, Linolyl, Linolenyl, Elaostearyl.

Bevorzugt weisen die Reste $R^1$ und $R^2$ eine Differenz der Kohlenstoffatomanzahl von mindestens 4, insbesondere mindestens 6 und speziell mindestens 10, auf.

Unter den Resten $R^1$ sind die $C_7$-$C_{27}$-Alkylreste und die $C_7$-$C_{27}$-Alkenylreste bevorzugt.

Unter den Resten $R^2$ sind die $C_1$-$C_6$-Alkylreste und Wasserstoff bevorzugt.

Besonders bevorzugt steht der Rest $R^1$ für einen Alkylrest oder Alkenylrest, der sich formal von Caprinsäure, Laurinsäure, Myristinsäure, Palmitinsäure, Stearinsäure, Isostearinsäure, Ölsäure, Linolsäure, Arachidonsäure, Erucasäure, Behensäure, und Gemischen davon, durch Entfernen der Carbonsäuregruppe ableitet.

Bevorzugt steht der Rest $R^2$ für Wasserstoff, Methyl, Ethyl, n-Propyl, und Gemische davon.

Vorzugsweise weisen etwa 0,3 bis 40 %, bevorzugt 0,6 bis 25 %, insbesondere 1 bis 15 % der Polyamin-Stickstoffatome einen Acylrest der Formel I auf. Speziell weisen mindestens 1,5 %, spezieller mindestens 2,5 % der Polyamin-Stickstoffatome einen Acylrest der Formel I auf. Die Prozentwerte beziehen sich dabei auf die Stickstoffatome des Polyamins insgesamt, d. h. auf die Summe aus primären, sekundären und, falls vorhanden, tertiären Aminstickstoffen.

Vorzugsweise sind etwa 5 bis 100 %, bevorzugter 15 bis 90 %, insbesondere 30 bis 85 %, speziell 40 bis 80 % der Polyamin-Stickstoffe acyliert. Der Grad der Acylierung bezieht sich dabei auf die Summe von Acylresten der allgemeinen Formeln I und II.

Ein weiterer Gegenstand der Erfindung sind acylierte polymere Polyamine, wobei

a) 0,3 bis 15% der Polyamin-Stickstoffatome Acylreste der allgemeinen Formel I

$$R^1\text{-CO-} \hspace{4cm} (I)$$

tragen, worin

$R^1$ ausgewählt ist unter $C_7$-$C_{27}$-Alkyl, $C_7$-$C_{27}$-Alkenyl und $C_7$-$C_{27}$-Hydroxyalkyl, und

b) ein Teil der Polyamin-Stickstoffatome Acylreste der allgemeinen Formel II

$$R^2\text{-CO-} \hspace{4cm} (II)$$

trägt, worin

$R^2$  ausgewählt ist unter Wasserstoff, $C_1$-$C_6$-Alkyl und $C_1$-$C_6$-Hydroxyalkyl.

Die erfindungsgemäß verwendbaren bzw. erfindungsgemäßen acylierten polymeren Polyamine sind erhältlich durch Umsetzung wenigstens eines Polyamins, bevorzugt wenigstens eines Polyalkylenpolyamins, insbesondere wenigstens eines Polyethylenimins, mit wenigstens einer langkettigen Carbonsäure oder einem Derivat davon und wenigstens einer kurzkettigen Carbonsäure oder einem Derivat davon.

Ein geeignetes Verfahren zur Herstellung der erfindungsgemäß verwendbaren bzw. erfindungsgemäßen acylierten polymeren Polyamine besteht darin, dass man ein polymeres Polyamin mit

a) wenigstens einer Carbonsäure der allgemeinen Formel I.1

$$R^1\text{-COOH} \tag{I.1}$$

worin

$R^1$  ausgewählt ist unter $C_7$-$C_{27}$-Alkyl, $C_7$-$C_{27}$-Alkenyl und $C_7$-$C_{27}$-Hydroxyalkyl,

oder einem Ester, Anhydrid oder Halogenid davon, und

b) wenigstens einer Carbonsäure der allgemeinen Formel II.1

$$R^2\text{-COOH} \tag{II.1}$$

worin

$R^2$  ausgewählt ist unter Wasserstoff, $C_1$-$C_6$-Alkyl, $C_1$-$C_6$-Hydroxyalkyl,

oder einem Ester, Anhydrid, Lacton oder Halogenid davon,
umsetzt.

Geeignete polymere Polyamine sind lineare oder verzweigte Polymere, bevorzugt verzweigte Polymere. Bevorzugt weisen diese acylierbare sekundäre Aminogruppen in der Polymerkette auf. Zusätzlich können diese Polymere endständige, primäre Aminogruppen und/oder tertiäre Aminogruppen in der Polymerkette aufweisen.

Nach einer geeigneten Ausführungsform können die amidierbaren Polyalkylenpolyamine streng oder im Wesentlichen linear aufgebaut sein. Solche Polymere weisen dann ausschließlich oder im Wesentlichen primäre und sekundäre Aminogruppen auf. Bevorzugt werden Polyalkylenpolyamine eingesetzt, die verzweigt sind. Dabei umfassen die Polyamin-Stickstoffatome nicht nur primäre und sekundäre, sondern auch tertiäre Aminogruppen. Letztere sind einer Umsetzung in einer Amidierungsreaktion nicht zugängig. Vorzugsweise wird ein Polyalkylenpolyamin mit einem gewichtsmittleren Molekulargewicht von etwa 500 bis 1 000 000, bevorzugt etwa 1 000 bis 800 000, bevorzugter 1 500 bis 200 000, insbesondere 2 000 bis 50 000, eingesetzt. Bevorzugte Polyalkylenpolyamine sind z. B. Polyethylenimine.

Geeignete Polyethylenimine sind nach üblichen, dem Fachmann bekannten Verfahren erhältlich und werden kommerziell vertrieben. Geeignete Polyethylenimine sind alle Polymere, die durch kationisch initiierte Polymerisation von Ethylenimin (Aziridin) und/oder N-substituierten Aziridinen erhältlich sind. Vorzugsweise handelt es sich um Homopolymere von Ethylenimin. Als Katalysatoren zur kationischen Polymerisation von Ethyleniminen können z. B. Brönsted-Säuren, wie Schwefelsäure, Phosphorsäure, p-Toluolsulfonsäure, oder Carbonsäuren, wie Ameisensäure, Essigsäure oder Propionsäure, oder Lewis-Säuren, wie Halogenide, beispielsweise Zinkchlorid oder Alkylhalogenide, wie Methylchlorid, Ethylchlorid, Benzylchlorid oder Ethylenchlorid, eingesetzt werden. Geeignete Polyethylenimine können auch durch Umsetzung von Ethylenchlorid mit Ammoniak und Aminen erhalten werden. Polymerisate dieser Art sind Handelsprodukte. Der Anteil an tertiären Aminogruppen beträgt bei den verzweigten Polyalkylenpolyaminen z. B. 0,5 bis 40 Mol-%, wie etwa 10 bis 35 Mol-%, bezogen auf die Gesamtmenge der Polyamin-Stickstoffatome. Bei der Umsetzung der Polyalkylenpolyamine mit den zuvor genannten Carbonsäuren kann unter Umständen auch ein unerheblicher Anteil der Polyamin-Stickstoffatome unter Salzbildung reagieren. Gegebenenfalls werden Salze z. B. bei der Umsetzung von tertiären Aminogruppen mit Carbonsäuren erhalten. Dadurch wird der Einsatz der erfindungsgemäß verwendbaren bzw. erfindungsgemäßen polymeren Polyamine als Verdickungsmittel im Allgemeinen nicht beeinträchtigt.

Die Carbonsäuren der Formel I.1 können in Reinform oder als Gemische zur Herstellung der erfindungsgemäßen verwendbaren bzw. erfindungsgemäßen acylierten Polyamine eingesetzt werden.

Bevorzugt steht in der Formel I.1 der Rest $R^1$ für einen der zuvor genannten $C_7$- bis $C_{27}$-Alkyl- oder $C_7$- bis $C_{27}$-Alkenylreste.

Bevorzugt ist die Carbonsäure der Formel I.1 ausgewählt unter Caprinsäure, Laurinsäure, Myristinsäure, Palmitinsäure, Stearinsäure, Isostearinsäure, Ölsäure, Linolsäure, Arachidonsäure, Erucasäure, Behensäure, und Mischungen davon.

Bevorzugt wird ein Gemisch aus natürlich vorkommenden Carbonsäuren der allgemeinen Formel I.1 eingesetzt, wie z. B. Kokosfett, das im Wesentlichen Laurin- und Myristinsäure enthält, Talgfett, das überwiegend gesättigte und ungesättigte $C_{14}$-, $C_{16}$- und $C_{18}$-Carbonsäuren enthält, Sojaöl, Leinöl, Rapsöl, Fischöl. Vorzugsweise handelt es sich bei den langkettigen Carbonsäuren um $C_{12}$-bis $C_{18}$-Carbonsäuren und Gemische davon.

Bevorzugte Hydroxycarbonsäuren I.1 (Verbindungen der Formel I.1, worin $R^1$ für $C_7$-$C_{27}$-Hydroxyalkyl steht) sind 12-Hydroxystearinsäure, 9,10-Dihydrostearinsäure und 11-Hydroxyundecansäure.

Werden Gemische langkettiger Carbonsäuren eingesetzt, so können diese gewünschtenfalls, z. B. etwa 0 bis 10 Gew.-%, kurzkettige Carbonsäuren enthalten. Insbesondere Carbonsäuregemische aus natürlicher Herkunft enthalten unter Umständen einen Anteil an kurzkettigen Carbonsäuren.

Vorzugsweise handelt es sich bei der Carbonsäure der Formel II.1 um Ameisensäure, Essigsäure, Propionsäure, Buttersäure, oder eine Mischung davon. Insbesondere handelt es sich bei der Carbonsäure der Formel II.1 um Ameisensäure und/oder Essigsäure.

Beispiele für Hydroxycarbonsäuren II.1 (Verbindungen, worin $R^2$ für $C_1$-$C_6$-Hydroxyalkyl steht) sind 4-Hydroxybuttersäure und 6-Hydroxyhexansäure

Die Herstellung der erfindungsgemäß verwendbaren bzw. erfindungsgemäßen acylierten polymeren Polyamine erfolgt nach an sich bekannten Methoden, beispielsweise durch Umsetzung der oben erwähnten Polyalkylenpolyamine mit wenigstens einer langkettigen Carbonsäure oder einem Derivat davon und mit wenigstens einer kurzkettigen Carbonsäure oder einem Derivat davon (Amidierung).

Das Polyamin kann gewünschtenfalls zuerst mit der/den langkettigen und dann mit der/den kurzkettigen Carbonsäure(n) oder zuerst mit der/den kurzkettigen Carbonsäure(n) oder gleichzeitig mit einem Gemisch davon umgesetzt werden. Bevorzugt wird das Polyamin in einem ersten Reaktionsschritt mit wenigstens einer langkettigen Carbonsäure und anschließend in einem zweiten Reaktionsschritt mit wenigstens einer kurzkettigen Carbonsäure umgesetzt. Die Edukte werden im ersten Reaktionsschritt in einem solchen molaren Verhältnis eingesetzt, dass, bezogen auf den Gesamtstickstoffgehalt des Polyamins (einschließlich gegebenenfalls vorhandener tertiärer Aminogruppen), 0,3 bis 40 Mol-%, bevorzugt 0,6 bis 25 Mol-%, insbesondere 1 bis 15 Mol-% der Polyamin-Stickstoffe acyliert werden und einen Acylrest der Formel I aufweisen. Die dabei erhaltenen, teilweise acylierten polymeren Polyamine können gewünschtenfalls vor ihrer weiteren Umsetzung nach üblichen Verfahren isoliert und gegebenenfalls gereinigt werden. Bevorzugt erfolgt der zweite Reaktionsschritt in dem gleichen Reaktionsgefäß wie der erste. Im zweiten Reaktionsschritt werden das teilweise acylierte Polyamin und wenigstens eine kurzkettige Carbonsäure in einem solchen molaren Verhältnis eingesetzt, dass, bezogen auf den Gesamtstickstoffgehalt des Polyamins (einschließlich gegebenenfalls vorhandener tertiärer Aminogruppen), 5 bis 100 %, bevorzugt 15 bis 90 %, insbesondere 30 bis 85 %, speziell 40 bis 80 %, der Polyamin-Stickstoffe acyliert werden.

Die Amidierung kann unter üblichen Bedingungen ohne Zusatz eines Katalysator oder unter Verwendung eines sauren oder basischen Katalysators durchgeführt werden. Geeignete saure Katalysatoren sind beispielsweise Säuren, wie Lewis-Säuren, z. B. Schwefelsäure, p-Toluolsulfonsäure, phosphorige Säure, hypophosphorige Säure, Phosphorsäure, Methansulfonsäure, Borsäure, Aluminiumchlorid, Bortrifluorid, Tetraethylorthotitanat, Zinndioxid, Zinnbutyldilaurat oder Gemische davon. Geeignete basische Katalysatoren sind beispielsweise Alkoholate, wie Natriummethylat oder Natriumethylat, Alkalimetallhydroxide, wie Kaliumhydroxid, Natriumhydroxid oder Lithiumhydroxid, Erdalkalimetalloxide, wie Magnesiumoxid oder Calciumoxid, Alkali- und Erdalkalimetallcarbonate, wie Natrium-, Kalium- und Calciumcarbonat, Phosphate, wie Kaliumphosphat, und komplexe Metallhydride, wie Natriumborhydrid.

Wird ein zusätzlicher Katalysator eingesetzt, dann im Allgemeinen in Mengen von 0,05 bis 10 Gew.-%, vorzugsweise 0,1 bis 5 Gew.-%, bezogen auf die Gesamtmenge der Ausgangsstoffe.

Die Umsetzung kann in einem geeigneten Lösungsmittel oder vorzugsweise lösungsmittelfrei durchgeführt werden. Bei Verwendung eines Lösungsmittels sind beispielsweise Kohlenwasserstoffe, wie Toluol oder Xylol, Acetonitril, N,N-Dimethylformamid, N,N-Dimethylacetamid, N-Methylpyrrolidon, Diethylenglykoldimethylether, Ethylenglykoldimethylether, Ethylencarbonat, Propylencarbonat geeignet. Im Allgemeinen wird das Lösungsmittel während der Umsetzung oder nach beendeter Umsetzung abdestilliert. Diese Destillation kann gegebenenfalls unter Schutzgas, wie Stickstoff oder Argon, erfolgen.

Die Amidierung erfolgt bei Verwendung einer Carbonsäure im Allgemeinen bei einem Druck im Bereich von 5 mbar bis Normaldruck und bei einer Temperatur im Bereich von 60 bis 220 °C, vorzugsweise 120 bis 180 °C. Bei Verwendung eines Carbonsäureesters erfolgt die Amidierung im Allgemeinen bei 30 bis 220 °C, vorzugsweise bei 50 bis 120 °C, und bei einem Druck im Bereich von 5 mbar bis Normaldruck. Die Reaktionszeiten liegen im Allgemeinen im Bereich von 1 bis 15 Stunden. Der Grad der Umsetzung lässt sich über die Menge an entferntem Reaktionswasser bzw. Reaktionsalkohol verfolgen. Nicht umgesetzte Carbonsäure wird im Allgemeinen nach beendeter Umsetzung in üblicher Weise entfernt, beispielsweise im Vakuum, durch Extraktion oder Strippen.

Alternativ kann man die erfindungsgemäß verwendbaren bzw. erfindungsgemäßen acylierten polymeren Polyamine auch durch Umsetzung wenigstens eines Polyamins mit wenigstens einem geeigneten Carbonsäurederivat, wie einem Carbonsäurehalogenid, z. B. einem Carbonsäurechlorid, einem Carbonsäureanhydrid oder einem gemischten Carbonsäureanhydrid, oder im Falle der Hydroxycarbonsäuren II.1 einem Lacton erhalten.

Nach dem zuvor genannten Verfahren werden Produkte erhalten, bei denen etwa 10 bis 100 %, z. B. etwa 20 bis 95 % der theoretisch acylierbaren (d. h. der primären und sekundären) Aminogruppen acyliert sind. Primäre Aminogruppen werden dabei im Allgemeinen nur monoacyliert. Dabei kann der praktisch maximal erreichbare Acylierungsgrad gleich groß oder geringer sein als der theoretisch maximal erreichbare Acylierungsgrad. Im Allgemeinen liegt der praktisch maximal erreichbare Acylierungsgrad bei etwa 70 bis 100 % des theoretisch maximal erreichbaren Acylierungsgrades. Im Allgemeinen werden Produkte mit sehr guten Verdickereigenschaften sowohl beim praktisch maximal erreichbaren Acylierungsgrad als auch unterhalb davon erhalten. Zur Herstellung von Produkten mit im Wesentlichen maximalem praktischen Acylierungsgrad kann man so vorgehen, dass wenigstens eine der Carbonsäuren, vorzugsweise wenigstens eine kurzkettige Carbonsäure, in einem Überschuss gegenüber den amidierbaren Aminogruppen eingesetzt wird. Nichtumgesetzte Carbonsäure kann nach Beendigung der Umsetzung wie zuvor beschrieben entfernt werden.

Zur Herstellung acylierter polymerer Polyamine kann man das Polyamin zuerst mit einer langkettigen Carbonsäure zu einem teilacylierten Polyamin umsetzen und dieses dann mit einer kurzkettigen Carbonsäure weiter umsetzen, wobei das Molmengenverhältnis von kurzkettiger Carbonsäure zu acylierbaren Aminogruppen des teilacylierten Polyamins so gewählt wird, dass die kurzkettige Carbonsäure in einem Überschuss eingesetzt wird. Nichtumgesetzte Carbonsäure wird abschließend entfernt.

Das zuvor beschrieben Verfahren zur Herstellung acylierter polymerer Polyamine führt zu Produkten, bei denen die Aminogruppen im Wesentlichen acyliert und nicht in Salze überführt werden. Ein geringer Anteil an Salzgruppen ist für den Einsatz der acylierten Polyamine als Verdickungsmittel unkritisch.

Erfindungsgemäß verwendbare bzw. erfindungsgemäße acylierte polymere Polyamine sind auch durch ringöffnende Polymerisation eines Monomerengemisches erhältlich, das wenigstens ein 4,5-Dihydrooxazol und/oder 5,6-Dihydro-4H-1,3-oxazin, jeweils mit einem der zuvor beschriebenen Reste $R^1$ in 2-Position, und wenigstens ein 4,5-Dihydrooxazol und/oder 5,6-Dihydro-4H-1,3-oxazin, jeweils mit einem der zuvor beschriebenen Reste $R^2$ in 2-Position, enthält.

Ein weiteres geeignetes Verfahren zur Herstellung acylierter polymerer Polyamine besteht darin, dass man

a) wenigstens ein 4,5-Dihydrooxazol mit einem Rest $R^1$ in der 2-Position und/oder wenigstens ein 5,6-Dihydro-4H-1,3- oxazin mit einem Rest $R^1$ in der 2-Position, wobei

$R^1$     ausgewählt ist unter $C_7$-$C_{27}$-Alkyl, $C_7$-$C_{27}$-Alkenyl und $C_7$-$C_{27}$-Hydroxyalkyl, und

b) wenigstens ein 4,5-Dihydrooxazol mit einem Rest $R^2$ in der 2-Position und/oder wenigstens ein 5,6-Dihydro-4H-1,3- oxazin mit einem Rest $R^2$ in der 2-Position, wobei

$R^2$     für Wasserstoff, einen $C_1$-$C_6$-Hydroxyalkylrest oder einen $C_1$-$C_6$-Alkylrest steht,

sowie gegebenenfalls wenigstens ein weiteres Comonomer in einer kationischen ringöffnenden Polymerisation umsetzt.

Die ringöffnende Polymerisation von in 2-Position substituierten 4,5-Dihydrooxazolen und/oder 5,6-Dihydro-4H-1,3-oxazinen führt zu streng linearen Polyaminen. Die Monomere werden in solchen molaren Mengen eingesetzt, dass etwa 0,3 bis 40 %, bevorzugt 0,6 bis 25 %, insbesondere 1 bis 15 % der Polyamin-Stickstoffatome einen Acylrest der Formel I aufweisen. Werden ausschließlich in 2-Position mit Resten $R^1$ und $R^2$ substituierte 4,5-Dihydrooxazole bzw. 5,6-Dihydro-4H-1,3-oxazine eingesetzt, so erhält man acylierte polymere Polyamine, die vollständig acyliert sind. Gewünschtenfalls kann man diese dann einer partiellen Hydrolyse nach bekannten Verfahren unterziehen. So können auch bei der Herstellung der erfindungsgemäß verwendbaren bzw. erfindungsgemäßen Polyamine durch kationische Polymerisation Produkte erhalten werden, bei denen 5 bis 100 %, bevorzugt 15 bis 90 %, insbesondere 30 bis 85 % der Polyamin-Stickstoffatome acyliert sind.

Die Herstellung der erfindungsgemäß verwendbaren bzw. erfindungsgemäßen acylierten polymeren Polyamine durch kationische ringöffnende Polymerisation erfolgt nach üblichen, dem Fachmann bekannten Verfahren.

Geeignete Initiatoren der kationischen Polymerisation sind z. B. Brönsted-Säuren, wie Perchlorsäure und Trifluormethansulfonsäure, Lewis-Säuren, wie Bortrifluorid, Aluminiumtrifluorid, gegebenenfalls zusätzlich mit Wasser oder Chlorwasserstoff, und Kombinationen von Alkyl- und Aralkylhalogeniden mit Lewis-Säuren.

Gegenstand der Erfindung ist die Verwendung der zuvor beschriebenen acylierten polymeren Polyamine als Verdickungsmittel, bevorzugt in wässrigen Formulierungen, und insbesondere in kosmetischen Zusammensetzungen.

Gegenstand der vorliegenden Erfindung sind auch wässrige Zusammensetzungen, die wenigstens ein acyliertes polymeres Polyamin wie oben definiert und zusätzlich wenigstens ein Tensid, ausgewählt unter Alkyl- oder Alkenylpolyglycosiden vorzugsweise unter $C_8$-$C_{18}$-, $C_8$-$C_{16}$-, $C_{12}$-$C_{18}$-, $C_{12}$-$C_{16}$- oder $C_{12}$-$C_{14}$-Alkyl- und/oder Alkenyl-polyglycosiden, enthalten.

Gegenstand der Erfindung sind weiterhin wässrige Zusammensetzungen, die enthalten:

a) wenigstens ein Alkyl- oder Alkenylpolyglycosid,

b) wenigstens ein erfindungsgemäß verwendbares bzw. erfindungsgemäßes acyliertes polymeres Polyamin wie oben definiert,

c) gegebenenfalls wenigstens ein weiteres, von a) verschiedenes Tensid und

d) gegebenenfalls ein Neutralsalz.

Bei den Polyglycosiden handelt es sich vorzugsweise um Polyglucoside, die ein durch Acetalisierung von Glucose mit Fettalkoholen erhaltenes Homologengemisch darstellen. Die mittlere Anzahl an Glucoseeinheiten pro Molekül liegt im Bereich von 1 bis 3.

Das acylierte polymere Polyamin ist in den Zusammensetzungen im Allgemeinen in einer Menge von mindestens 0,1 Gew.-% bis 20 Gew.-%, vorzugsweise in einer Menge von 0,5 bis 20 Gew.-%, bezogen auf das Gesamtgewicht des Mittels, enthalten.

Als Tensid können in den erfindungsgemäßen Mitteln anionische, nichtionische, kationische und amphotere Tenside enthalten sein. Es hat sich gezeigt, dass die acylierten polymeren Polyamine auch mit anionischen Tensiden verträglich sind.

Beispiele für Tenside sind Alkylpolyglycoside, Fettalkoholsulfate, Fettalkoholsulfonate, Fettalkoholethersulfate, Fettalkoholethersulfonate, Alkansulfonate, Fettalkoholethoxylate, Fettalkoholphosphate, Alkylbetaine, Sorbitanester, POE-Sorbitanester, Zuckerfettsäureester, Fettsäurepolyglycerinester, Fettsäurepartialglyceride, Fettsäurecarboxylate, Fettalkoholsulfosuccinate, Fettsäuresarcosinate, Fettsäureisothionate, Fettsäuretaurinate, Zitronensäureester, Silikon-Copolymere, Fettsäurepolyglykolester, Fettsäureamide, Fettsäurealkanolamide, quartäre Ammoniumverbindungen, Alkylphenoloxethylate, Fettaminoxethylate.

Vorzugsweise kommt in den erfindungsgemäßen Zusammensetzungen ein anionisches Tensid und/oder ein nichtionisches Tensid zur Anwendung, wobei als anionisches Tensid besonders bevorzugt ein Fettalkoholsulfat, Fettalkoholsulfonat, Fettalkoholethersulfonat, Alkansulfonat und insbesondere ein Fettalkoholethersulfat und als nichtionisches Tensid ein Alkyl- und/oder Alkenylpolyglycosid verwendet wird.

Eine weitere bevorzugte Ausführungsform ist eine wässrige Zusammensetzung in Form einer gießbaren Lösung, die wenigstens 1 bis 50 Gew.-%, bevorzugt 10 bis 40 Gew.-%, insbesondere 20 bis 30 Gew.-% wenigstens eines acylierten polymeren Polyamins enthält. Vorzugsweise weist diese gießbare Lösung im Wesentlichen keinen weiteren Tensidzusatz auf. Gegebenenfalls kann diese gießbare Lösung bis zu 20 Gew.-%, bezogen auf das Gesamtgewicht der Lösung, wenigstens eines der im Folgenden genannten Cosolventien enthalten. Gewünschtenfalls kann der pH-Wert der wässrigen Zusammensetzung durch Zugabe einer geeigneten Säure, z. B. Milchsäure oder Citronensäure, eingestellt werden. Dabei können u. U. nicht acylierte Aminogruppen in die entsprechenden Salze überführt werden.

Zur zusätzlichen Verdickung können die erfindungsgemäßen Zusammensetzungen ein Neutralsalz, insbesondere Natriumsulfat und vorzugsweise Natriumchlorid, enthalten. Das Neutralsalz ist im Allgemeinen in einer Menge von 0,1 bis 10 Gew.-%, insbesondere 0,5 bis 6 Gew.-%, enthalten.

Darüber hinaus können die erfindungsgemäßen Zusammensetzungen übliche, dem Fachmann bekannte Hilfs- und Zusatzstoffe enthalten, beispielsweise Cosolventien wie Alkohole, z. B. Ethanol, Isopropanol, Ethylenglykol, Propylenglykol, Glycerin, Lanolin-Derivate, Cholesterin-Derivate, Isopropylmyristat, Isopropylpalmitat, Elektrolyte, Farbstoffe, Konservierungsmittel, Säuren (beispielsweise Milchsäure, Citronensäure). Wie zuvor erwähnt, tritt in Abhängigkeit vom pH-Wert der Zusammensetzung u. U. Salzbildung auf.

Jeweils bezogen auf das Gesamtgewicht der Inhaltsstoffe (ausgenommen Wasser) enthalten die erfindungsgemäßen Mittel im Allgemeinen:

- 0,2 bis 50 Gew.-%, vorzugsweise 0,5 bis 25 Gew.-% wenigstens eines erfindungsgemäß verwendbaren bzw. erfindungsgemäßen acylierten polymeren Polyamins,

- 50 bis 99,8 Gew.-%, vorzugsweise 65 bis 90,5 Gew.-% wenigstens eines Tensids wie oben definiert und

- 0 bis 50 Gew.-%, vorzugsweise 0,5 bis 30 Gew.-% wenigstens eines Neutralsalzes,

wobei sich die Mengen zu 100 Gew.-% addieren.

Gemäß einer bevorzugten Ausführungsform enthalten die erfindungsgemäßen Zusammensetzungen (bezogen auf das Gesamtgewicht der Inhaltsstoffe):

a) 10 bis 90 Gew.-%, vorzugsweise 15 bis 85 Gew.-% wenigstens eines Alkyl- oder Alkenylpolyglycosids;

b) 0,2 bis 50 Gew.-%, vorzugsweise 0,5 bis 25 Gew.-% wenigstens eines acylierten polymeren Polyamins;

c) 10 bis 90 Gew.-%, vorzugsweise 15 bis 85 Gew.-% wenigstens eines anionischen Tensids, insbesondere eines Alkylethersulfates, und

d) 0 bis 50 Gew.-%, vorzugsweise 0,5 bis 30 Gew.-% wenigstens eines Neutralsalzes,

wobei sich die Mengen zu 100 Gew.-% addieren.

Die Herstellung dieser erfindungsgemäßen Zusammensetzungen erfolgt in üblicher Weise, wobei die Amide der polymerisierten Fettsäuren als solche oder als wässrige Lösung eingesetzt werden können. Im Allgemeinen wird das Verdickungsmittel in die wässrige Zusammensetzung eingerührt. Dabei kann das Verdickungsmittel in Substanz oder in Lösung, bevorzugt in wässriger Lösung, eingesetzt werden.

Bei den erfindungsgemäßen Zusammensetzungen handelt es sich insbesondere um kosmetische (Shampoos), pharmazeutische oder diätetische Zusammensetzungen. Die Amide der polymerisierten Fettsäuren können jedoch auch in technischen Präparaten eingesetzt werden, wie Hydraulikflüssigkeiten, Reinigungspräparaten, Pflanzenbehandlungsmitteln, Druckfarben, Anstrichmittel und Präparate für die Tierernährung.

Gegenstand der Erfindung ist ein Verfahren zur Erhöhung der viskosität von tensidhaltigen Zusammensetzungen, wobei man einer Zusammensetzung eine verdickend wirkende Menge wenigstens eines erfindungsgemäß verwendbaren bzw. erfindungsgemäßen acylierten polymeren Polyamins zusetzt.

Die nachfolgenden Beispiele erläutern die Erfindung, ohne sie zu begrenzen.

Die in den Beispielen gebrauchte Abkürzung hat die folgende Bedeutung:

SZ: Säurezahl

Beispiel 1

516 g eines Polyethylenimins mit einem zahlenmittleren Molekulargewicht ($M_w$) von ca 25 000 wurden bei 70 °C mit 1,5 g 50%iger Hypophosphoriger Säure und 237,5 g Isostearinsäure (SZ = 189 mg KOH/g) (Prisorine® 3501, Fa. Unichema) versetzt und 6,5 Stunden bei 160 °C unter einem Stickstoffstrom gerührt. Das sich bildende Reaktionswasser wurde abdestilliert. Man erhielt 704 g eines zu 6,7 Mol-% mit Isostearinsäure acylierten Polyethylenimins.

Beispiel 2

76,0 g des teilweise acylierten Polyethylenimins aus Beispiel 1 wurden bei 160 °C innerhalb von 2 Stunden mit 48,9 g Essigsäure versetzt und weitere 6,5 Stunden bei 160 °C unter einem Stickstoffstrom gerührt. Das sich bildende Reaktionswasser wurde abdestilliert. Man erhielt 106 g eines zu 6,7 Mol-% mit Isostearinsäure und insgesamt zu 65 Mol-% acylierten Polyethylenimins.

Beispiel 3

645 g eines Polyethylenimins mit einem zahlenmittleren Molekulargewicht ($M_w$) von ca 25 000 wurden bei 70 °C mit 3,5 g 50%iger Hypophosphoriger Säure und 219 g $C_{12}$-$C_{18}$-Fettsäure (SZ = 256 mg KOH/g) (Edenor® HK 12-18, Fa. Henkel) versetzt und 6 Stunden bei 160 °C unter einem Stickstoffstrom gerührt. Das sich bildende Reaktionswasser wurde abdestilliert. Man erhielt 846 g eines zu 6,7 Mol-% mit $C_{12}$-$C_{18}$-Fettsäure acylierten Polyethylenimins.

Beispiel 4

150,0 g des teilweise acylierten Polyethylenimins aus Beispiel 3 wurden bei 140 °C innerhalb von 1 Stunde mit 131,0 g Essigsäure versetzt und 4,5 Stunden bei 160 °C unter einem Stickstoffstrom gerührt. Das sich bildende Reaktionswasser wurde abdestilliert. Man erhielt 236 g eines zu 6,7 Mol-% mit $C_{12}$-$C_{18}$-Fettsäure und insgesamt zu 69 Mol-% acylierten Polyethylenimins.

Beispiel 5

516 g eines Polyethylenimins mit einem zahlenmittleren Molekulargewicht ($M_w$) von ca 25 000 wurden bei 70 °C mit 2,95 g 50%iger Hypophosphoriger Säure und 219 g $C_{12}$-$C_{18}$-Fettsäure (SZ = 256 mg KOH/g) (Edenor® HK 12-18, Fa. Henkel) versetzt und 6 Stunden bei 160 °C unter $N_2$-Schutzgas gerührt. Das sich bildende Reaktionswasser wurde abdestilliert. Man erhielt 717 g eines zu 8,3 Mol-% mit $C_{12}$-$C_{18}$-Fettsäure acylierten Polyethylenimins.

Beispiel 6

100,0 g des teilweise acylierten Polyethylenimins aus Beispiel 5 wurden bei 140 °C innerhalb von 1 Stunde mit 86,0 g Essigsäure versetzt und 4,5 Stunden bei 160 °C unter einem Stickstoffstrom gerührt. Das sich bildende Reaktionswasser wurde abdestilliert. Man erhielt 154 g eines zu 8,3 Mol-% mit $C_{12}$-$C_{18}$-Fettsäure und insgesamt zu 68 Mol-% acylierten Polyethylenimins.

Beispiel 7

100,0 g des teilweise acylierten Polyethylenimins aus Beispiel 1 wurden bei 140 °C innerhalb von 1 Stunde mit 66,7 g Ameisensäure versetzt und weitere 4,5 Stunden bei 150 °C unter einem Stickstoffstrom gerührt. Das sich bildende Reaktionswasser wurde abdestilliert. Man erhielt 157 g eines zu 6,7 Mol-% mit Isostearinsäure und insgesamt zu 67 Mol-% acylierten Polyethylenimins.

Beispiel 8

545 g einer 47%igen wässrigen Lösung eines Polyethylenimins ($M_w$ von ca. 750 000) wurden mit 2,40 g 50%iger Hypophosphoriger Säure versetzt. Unter Abdestillieren des Wassers wurden 50,4 g Isostearinsäure (SZ = 189 mg KOH/g) (Prisorine® 3501, Fa. Unichema) bei 140 °C hinzudosiert. Es wurde 6,5 Stunden bei 160 °C unter einem Stickstoffstrom gerührt. Das sich bildende Reaktionswasser wurde abdestilliert. Man erhielt 310 g eines zu 3,3 Mol-% mit Isostearinsäure acylierten Polyethylenimins.

Beispiel 9

100,0 g des teilweise acylierten Polyethylenimins aus Beispiel 8 wurden bei 140 bis 160 °C innerhalb von 2 Stunden mit 72,0 g Essigsäure versetzt und weitere 4,5 Stunden bei 160 °C unter einem Stickstoffstrom gerührt. Das sich bildende Reaktionswasser wurde abdestilliert. Man erhielt 148 g eines zu 3,3 Mol-% mit Isostearinsäure und insgesamt zu ca. 68 Mol-% acylierten Polyethylenimins.

Beispiel 10

774 g eines Polyethylenimins mit einem zahlenmittleren Molekulargewicht ($M_w$) von ca 25 000 wurden bei 70 °C mit 3,97 g 50%iger Hypophosphoriger Säure und 219 g $C_{12}$-$C_{18}$-Fettsäure (SZ = 256 mg KOH/g) (Edenor® HK 12-18, Fa. Henkel) versetzt und 6,5 Stunden bei 160 °C unter einem Stickstoffstrom gerührt. Das sich bildende Reaktionswasser wurde abdestilliert. Man erhielt 973 g eines zu 5,6 Mol-% mit $C_{12}$-$C_{18}$-Fettsäure acylierten Polyethylenimins.

Beispiel 11 (Ameisensäure im Überschuss)

100,0 g des teilweise acylierten Polyethylenimins aus Beispiel 10 wurden bei 140 °C innerhalb von 1 Stunde mit 84,9 g Ameisensäure versetzt und 4,5 Stunden bei 140 °C unter einem Stickstoffstrom gerührt. Das sich bildende Reaktionswasser wurde abdestilliert. Anschließend wurde die Temperatur auf 150 °C erhöht und überschüssige Ameisensäure im Stickstoffstrom entfernt. Man erhielt 141 g eines zu 5,6 Mol-% mit $C_{12}$-$C_{18}$-Fettsäure und insgesamt zu ca. 73 Mol-% acylierten Polyethylenimins.

Beispiel 12

464 g eines Polyethylenimins mit einem zahlenmittleren Molekulargewicht ($M_w$) von ca 25 000 wurden bei 70 °C mit 2,85 g 50%iger Hypophosphoriger Säure und 248 g $C_{12}$-$C_{18}$-Fettsäure (SZ = 271 mg KOH/g) (Edenor® HK 12 70, Fa. Henkel) versetzt und 6,5 Stunden bei 160 °C unter einem Stickstoffstrom gerührt. Das sich bildende Reaktionswasser wurde abdestilliert. Es wurden 692 g eines zu 11 Mol-% mit $C_{12}$-$C_{18}$-Fettsäure acylierten Polyethylenimins erhalten.

Beispiel 13

100,0 g des teilweise acylierten Polyethylenimins aus Beispiel 12 wurden bei 140 °C innerhalb von 1 Stunde mit 47,9 g Ameisensäure versetzt und 4,5 Stunden bei 150 °C unter einem Stickstoffstrom gerührt. Das sich bildende Reaktionswasser wurde abdestilliert. Man erhielt 120 g eines zu 11 Mol-% mit $C_{12}$-$C_{18}$-Fettsäure und insgesamt zu ca. 58 Mol-% acylierten Polyethylenimins.

Beispiel 14

Es wurde folgende Zusammensetzung hergestellt:

| | |
|---|---|
| Plantaren® 2000 der Fa. Henkel | |
| ($C_8$-$C_{16}$-Alkylpolyglycosid; 50 %ig) Texapon® NSO der Fa. Henkel | 160 g |
| (Natriumlaurylethersulfat; 28 %-ig) | 220 g |
| vollentsalztes Wasser | 610 g |

Der pH-Wert der Zusammensetzung wurde durch Zugabe von Citronensäure auf 5,5 eingestellt. Anschließend wurden 3 Gew.-% Natriumchlorid, bezogen auf das Gesamtgewicht der Zusammensetzung, zugegeben. Die erhaltene Zusammensetzung hatte dann eine Viskosität von 12,5 mPas. In gleiche Teile dieser Zusammensetzung wurden anschließend jeweils 2 Gew.-% eines acylierten polymeren Polyamins eingerührt und die Viskosität bestimmt. Die Viskositätsmessungen erfolgten mit einem Gerät der Bezeichnung HAAKE VT 500, Messeinrichtung PK5-1°; Temperatur 20 °C; Schergeschwindigkeit 30 $s^{-1}$. Die erhaltenen Viskositäten (in mPas) sind in der nachfolgenden Tabelle zusammengestellt.

| Acyliertes Polyamin | 0 % (mPas) | 2,0 % (mPas) |
|---|---|---|
| Beispiel 2 | 12,5 | 3930 |
| Beispiel 4 | 12,5 | 4130 |
| Beispiel 6 | 12,5 | 4020 |
| Beispiel 7 | 12,5 | 3260 |
| Beispiel 9 | 12,5 | 3570 |
| Beispiel 11 | 12,5 | 5400 |
| Beispiel 13 | 12,5 | 5590 |

**Patentansprüche**

**1.** Verwendung von acylierten polymeren Polyaminen, wobei

a) ein Teil der Polyamin-Stickstoffatome Acylreste der allgemeinen Formel I

$$R^1\text{-CO-} \tag{I}$$

trägt, worin

$R^1$ ausgewählt ist unter $C_7$-$C_{27}$-Alkyl, $C_7$-$C_{27}$-Alkenyl und $C_7$-$C_{27}$-Hydroxyalkyl, und

b) ein Teil der Polyamin-Stickstoffatome Acylreste der allgemeinen Formel II

$$R^2\text{-CO-} \hspace{6cm} (II)$$

trägt, worin

R$^2$    ausgewählt ist unter Wasserstoff, $C_1$-$C_6$-Alkyl und $C_1$-$C_6$

als Verdickungsmittel.

**2.** Verwendung nach Anspruch 1, wobei R$^1$ in Formel I für einen $C_7$-$C_{27}$-Alkylrest oder einen $C_7$-$C_{27}$-Alkenylrest steht und R$^2$ in Formel II für Wasserstoff oder $C_1$-$C_6$-Alkyl steht.

**3.** Verwendung nach Anspruch 1 oder 2, wobei die Reste R$^1$ und R$^2$ eine Differenz der Zahl der Kohlenstoffatome von mindestens 4, bevorzugt mindestens 6, insbesondere mindestens 10, aufweisen.

**4.** Verwendung nach einem der vorhergehenden Ansprüche, wobei 0,3 bis 40 %, bevorzugt 0,6 bis 25 %, insbesondere 1 bis 15 % der Polyamin-Stickstoffatome einen Acylrest der Formel I aufweisen.

**5.** Verwendung nach einem der vorhergehenden Ansprüche, wobei 5 bis 100 %, bevorzugt 15 bis 90 %, insbesondere 30 bis 85 % der Polyamin-Stickstoffatome acyliert sind.

**6.** Verwendung von acylierten polymeren Polyaminen, wie in einem der Ansprüche 1 bis 5 definiert, als Verdickungsmittel in wässrigen Formulierungen.

**7.** Verwendung von acylierten polymeren Polyaminen, wie in einem der Ansprüche 1 bis 5 definiert, als Verdickungsmittel in kosmetischen Zusammensetzungen.

**8.** Verfahren zur Erhöhung der Viskosität von tensidhaltigen Zusammensetzungen, wobei man der Zusammensetzung eine verdikkend wirkende Menge wenigstens eines acylierten polymeren Polyamins, wie in einem der Ansprüche 1 bis 5 definiert, zusetzt.

**9.** Wässrige Zusammensetzung, enthaltend:

a) wenigstens ein Alkyl- oder Alkenylpolyglycosid,
b) wenigstens ein acyliertes polymeres Polyamin, wie in einem der Ansprüche 1 bis 5 definiert,
c) gegebenenfalls wenigstens ein weiteres, von a) verschiedenes Tensid, und
d) gegebenenfalls wenigstens ein Neutralsalz.

**10.** Wässrige Zusammensetzung nach Anspruch 9, enthaltend 0,1 bis 20 Gew.-% wenigstens eines acylierten polymeren Polyamins, wie in einem der Ansprüche 1 bis 5 definiert.

**11.** Acylierte polymere Polyamine, wobei

a) 0,3 bis 15% der Polyamin-Stickstoffatome Acylreste der allgemeinen Formel I

$$R^1\text{-CO-} \hspace{6cm} (I)$$

tragen, worin

R$^1$    ausgewählt ist unter $C_7$-$C_{27}$-Alkyl, $C_7$-$C_{27}$-Alkenyl und $C_7$-$C_{27}$-Hydroxyalkyl, und

b) ein Teil der Polyamin-Stickstoffatome Acylreste der allgemeinen Formel II

$$R^2\text{-CO-} \hspace{6cm} (II)$$

trägt, worin

R$^2$     ausgewählt ist unter Wasserstoff, C$_1$-C$_6$-Alkyl und C$_1$-C$_6$-Hydroxyalkyl,

**12.** Acylierte polymere Polyamine nach Anspruch 11, wobei R$^1$ in Formel I für einen C$_7$-C$_{27}$-Alkylrest oder einen C$_7$-C$_{27}$-Alkenylrest steht und R$^2$ in Formel II für Wasserstoff oder C$_1$-C$_6$-Alkyl steht.

**13.** Acylierte polymere Polyamine nach Anspruch 11 oder 12, wobei die Reste R$^1$ und R$^2$ eine Differenz der Zahl der Kohlenstoffatome von mindestens 4, bevorzugt mindestens 6, insbesondere mindestens 10, aufweisen.

**14.** Acylierte polymere Polyamine nach einem der Ansprüche 11 bis 13, wobei 5 bis 100 %, bevorzugt 15 bis 90 %, insbesondere 30 bis 85 % der Polyamin-Stickstoffatome acyliert sind.

**Claims**

**1.** The use of acylated polymeric polyamines, where

a) some of the polyamine nitrogen atoms carry acyl radicals of the general formula I

$$R^1\text{-CO-} \hspace{6cm} \text{(I),}$$

in which

R$^1$     is chosen from C$_7$-C$_{27}$-alkyl, C$_7$-C$_{27}$-alkenyl and C$_7$-C$_{27}$-hydroxyalkyl, and

b) some of the polyamine nitrogen atoms carry acyl radicals of the general formula II

$$R^2\text{-CO-} \hspace{6cm} \text{(II),}$$

in which

R$^2$     is chosen from hydrogen, C$_1$-C$_6$-alkyl and C$_1$- C$_6$ - hydroxyalkyl ,

as thickeners.

**2.** The use according to claim 1, where R$^1$ in formula I is a C$_7$-C$_{27}$-alkyl radical or a C$_7$-C$_{27}$-alkenyl radical and R$^2$ in formula II is hydrogen or C$_1$-C$_6$-alkyl.

**3.** The use according to claim 1 or 2, where the radicals R$^1$ and R$^2$ have a difference in the number of carbon atoms of at least 4, preferably at least 6, in particular at least 10.

**4.** The use according to one of the preceding claims, where 0.3 to 40%, preferably 0.6 to 25%, in particular 1 to 15%, of the polyamine nitrogen atoms have an acyl radical of the formula I.

**5.** The use according to one of the preceding claims, where 5 to 100%, preferably 15 to 90%, in particular 30 to 85%, of the polyamine nitrogen atoms are acylated.

**6.** The use of acylated polymeric polyamines as defined in one of claims 1 to 5 as thickeners in aqueous formulations.

**7.** The use of acylated polymeric polyamines as defined in one of claims 1 to 5 as thickeners in cosmetic compositions.

**8.** A method of increasing the viscosity of surfactant-containing compositions, where a thickening amount of at least one acylated polymeric polyamine as defined in one of claims 1 to 5 is added to the composition.

9. An aqueous composition comprising:

   a) at least one alkyl or alkenyl polyglycoside,
   b) at least one acylated polymeric polyamine as defined in one of claims 1 to 5,
   c) if appropriate at least one further surfactant different from a), and
   d) if appropriate at least one neutral salt.

10. The aqueous composition according to claim 9, comprising 0.1 to 20% by weight of at least one acylated polymeric polyamine as defined in one of claims 1 to 5.

11. An acylated polymeric polyamine where

   a) 0.3 to 15% of the polyamine nitrogen atoms carry acyl radicals of the general formula (I)

   $$R^1\text{-CO-} \hspace{6cm} (I),$$

   in which

   $R^1$     is chosen from $C_7$-$C_{27}$-alkyl, $C_7$-$C_{27}$-alkenyl and $C_7$-$C_{27}$-hydroxyalkyl, and

   b) some of the polyamine nitrogen atoms carry acyl radicals of the general formula II

   $$R^2\text{-CO-} \hspace{6cm} (II),$$

   in which

   $R^2$     is chosen from hydrogen, $C_1$-$C_6$-alkyl and $C_1$-$C_6$-hydroxyalkyl.

12. The acylated polymeric polyamine according to claim 11, where $R^1$ in formula I is a $C_7$-$C_{27}$-alkyl radical or a $C_7$-$C_{27}$-alkenyl radical and $R^2$ in formula II is hydrogen or $C_1$-$C_6$-alkyl.

13. The acylated polymeric polyamine according to claim 11 or 12, where the radicals $R^1$ and $R^2$ have a difference in the number of carbon atoms of at least 4, preferably at least 6, in particular at least 10.

14. The acylated polymeric polyamine according to one of claims 11 to 13, where 5 to 100%, preferably 15 to 90%, in particular 30 to 85%, of the polyamine nitrogen atoms are acylated.

**Revendications**

1. Utilisation de polyamines polymères acylées, dans lesquelles

   a) une partie des atomes d'azote de polyamine porte des radicaux acyle de la formule générale I :

   $$R^1\text{-CO-} \hspace{6cm} (I)$$

   dans laquelle

   $R^1$     est choisi parmi des groupes alkyle en $C_7$-$C_{27}$, alcényle en $C_7$-$C_{27}$ et hydroxyalkyle en $C_7$-$C_{27}$, et

   b) une partie des atomes d'azote de polyamine porte des radicaux acyle de la formule générale II :

   $$R^2\text{-CO-} \hspace{6cm} (II)$$

dans laquelle

$R^2$ est choisi parmi de l'hydrogène et des groupes alkyle en $C_1$-$C_6$ et hydroxyalkyle en $C_1$-$C_6$,

comme agents épaississants.

2. Utilisation suivant la revendication 1, dans laquelle $R^1$ représente dans la formule I un radical alkyle en $C_7$-$C_{27}$ ou un radical alcényle en $C_7$-$C_{27}$ et $R^2$ représente dans la formule II de l'hydrogène ou un groupe alkyle en $C_1$-$C_6$.

3. Utilisation suivant la revendication 1 ou 2, dans laquelle les radicaux $R^1$ et $R^2$ présentent une différence entre les nombres des atomes de carbone d'au moins 4, de préférence d'au moins 6, en particulier d'au moins 10.

4. Utilisation suivant l'une des revendications précédentes, dans laquelle 0,3 à 40 %, de préférence 0,6 à 25 %, en particulier 1 à 15 %, des atomes d'azote de polyamine présentent un radical acyle de la formule I.

5. Utilisation suivant l'une des revendications précédentes, dans laquelle 5 à 100 %, de préférence 15 à 90 %, en particulier 30 à 85 %, des atomes d'azote de polyamine sont acylés.

6. Utilisation de polyamines polymères acylées, telles que définies dans une des revendications 1 à 5, comme agents épaississants dans des formulations aqueuses.

7. Utilisation de polyamines polymères acylées, telles que définies dans une des revendications 1 à 5, comme agents épaississants dans des compositions cosmétiques.

8. Procédé pour augmenter la viscosité de compositions contenant un agent tensioactif, dans lequel on ajoute à la composition une quantité efficace du point de vue épaississement d'au moins une polyamine polymère acylée telle que définie dans une des revendications 1 à 5.

9. Composition aqueuse contenant :

   a) au moins un alkylpolyglycoside ou alcénylpolyglycoside,
   b) au moins une polyamine polymère acylée telle que définie dans une des revendications 1 à 5,
   c) éventuellement au moins un autre agent tensioactif différent de a), et
   d) éventuellement au moins un sel neutre.

10. Composition aqueuse suivant la revendication 9, contenant 0,1 à 20 % en poids d'au moins une polyamine polymère acylée, telle que définie dans une des revendications 1 à 5.

11. Polyamines polymères acylées, dans lesquelles

    a) 0,3 à 15 % des atomes d'azote de polyamine portent des radicaux acyle de la formule générale I :

$$R^1\text{-CO-} \qquad (I)$$

dans laquelle

$R^1$ est choisi parmi des groupes alkyle en $C_7$-$C_{27}$, alcényle en $C_7$-$C_{27}$ et hydroxyalkyle en $C_7$-$C_{27}$, et

b) une partie des atomes d'azote de polyamine porte des radicaux acyle de la formule générale II :

$$R^2\text{-CO-} \qquad (II)$$

dans laquelle

$R^2$ est choisi parmi de l'hydrogène et des groupes alkyle en $C_1$-$C_6$ et hydroxyalkyle en $C_1$-$C_6$.

**12.** Polyamines polymères acylées suivant la revendication 11, dans lesquelles $R^1$ représente dans la formule I un radical alkyle en $C_7$-$C_{27}$ ou un radical alcényle en $C_7$-$C_{27}$ et $R^2$ représente dans la formule II de l'hydrogène ou un groupe alkyle en $C_1$-$C_6$.

**13.** Polyamines polymères acylées suivant la revendication 11 ou 12, dans lesquelles les radicaux $R^1$ et $R^2$ présentent une différence entre les nombres des atomes de carbone d'au moins 4, de préférence d'au moins 6, en particulier d'au moins 10.

**14.** Polyamines polymères acylées suivant l'une des revendications 11 à 13, dans lesquelles 5 à 100 %, de préférence 15 à 90 %, en particulier 30 à 85 %, des atomes d'azote de polyamine sont acylés.